# EUROPEAN PATENT SPECIFICATION

(11) **EP 1 155 883 B1**
(45) Date of publication and mention of the grant of the patent: **12.04.2006**
(21) Application number: 01201786.9
(22) Date of filing: 14.05.2001
(51) Int. Cl.: B60G 9/00, B60G 11/113

(54) **Connection between vehicle axle and suspension arm**
Verbindung zwischen einer Fahrzeugradachse und einem Aufhängungslenker
Connexion entre un essieu de roue de véhicule et un bras de suspension

(30) Priority: 18.05.2000 NL 1015231
(43) Date of publication of application: 21.11.2001
(73) Proprietor: WEWELER NEDERLAND N.V., NL-7332 AP Apeldoorn (NL)
(72) Inventor: Aalderink, Derk Geert, 7245 NV Laren (NL)
(74) Representative: Brookhuis, Hendrik Jan Arnold

(56) References cited:
- EP-A- 0 590 528
- EP-A- 0 810 109
- EP-A- 0 830 957
- WO-A-00/01548
- DE-A- 3 135 042
- DE-C- 19 856 706
- DE-U- 29 713 996

## Description

The present invention relates to a connection between a tubular axle body of a vehicle and a suspension arm which extends in the longitudinal direction of the vehicle and crosses the axle body substantially at right angles, comprising an axle pad, which is positioned between the axle body and the suspension arm and has a recess in which a part of the axle body is accommodated, and also comprising straps, by which the axle pad and that part of the axle body which is accommodated therein are fixed to the suspension arm, the axle body, in the mounted position, being pressed into the recess on account of a clamping force which is supplied by the straps and in the process coming to bear against the inner wall of the recess, that part of the axle body which is accommodated in the axle pad being securely welded to the axle pad.

A connection of this type is known. The intention is for the straps to be tightened, so that the axle pad and/or the section of the axle body which is accommodated therein are deformed and come to bear tightly against one another.

Particularly in the case of round axle bodies, according to the prior art that part of the axle body which is accommodated by the axle pad is securely welded to the axle pad in order to lock the axle body against undesired rotation of the axle body. The clamping force exerted by the straps alone is not sufficient to achieve this. It is customary for that part of the axle body which is accommodated by the axle pad to be securely welded along both edges of the recess which run parallel to the centre axis of the axle as is for example disclosed in EP 0 830 967. An alternative is, for example, locking by means of a locking pin, but this requires a hole in the axle body, which weakens the axle.

A drawback of securely welding the axle body to the axle pad in the abovementioned way is that when the straps are tightened and the axle pad and/or the axle body is/are deformed as a result, an undesirable prestress is produced in the weld regions, which may cause them to be damaged.

It is an object of the invention to overcome this drawback. This object is achieved by a connection according to the preamble of claim 1, in which that part of the axle body which is accommodated in the axle pad is securely welded to a single edge, running substantially parallel to the centre axis of the axle body, of the recess.

The advantage is that the axle pad and/or the axle body which are welded to one another in this way can be deformed during tightening of the straps in such a manner that they always come to bear tightly against one another without an undesirable prestress being generated in the weld material and the region around the weld.

In the text which follows, the invention will be explained with reference to the drawing, in which:
Fig. 1 shows a side view of an embodiment of a connection according to the invention;
Fig. 2 shows a rear view of the embodiment shown in Fig. 1;
Fig. 3. shows a perspective view of an axle pad and straps associated with the embodiment shown in Fig. 1;
Fig. 4 shows a side view of a second embodiment of a connection according to the invention;
Fig. 5 shows a side view of a fourth embodiment of a connection according to the invention;
Fig. 6 shows a rear view of the embodiment shown in Fig. 5.

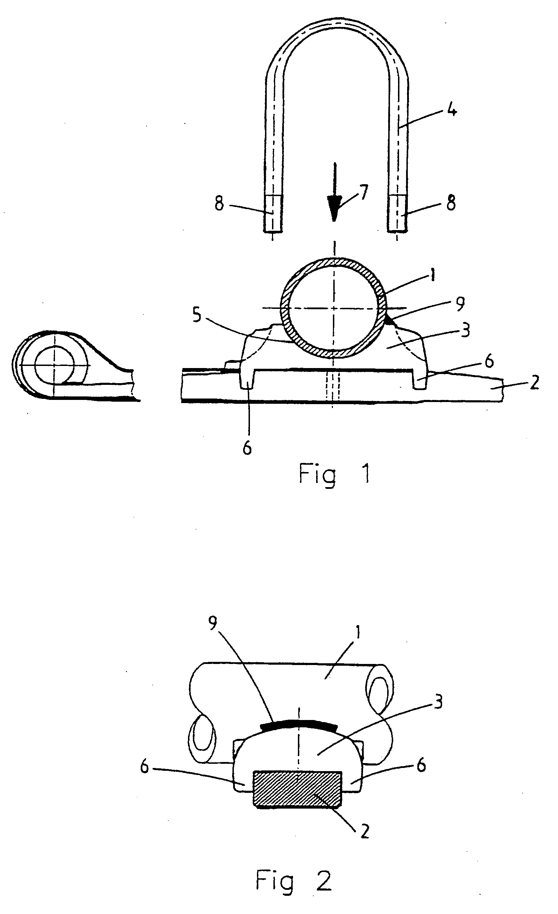

Figs. 1 and 2 show a connection between an axle body 1 of a vehicle and a suspension arm 2 which extends in the longitudinal direction of the vehicle and' crosses the axle body 1 substantially at right angles. In this embodiment, the axle body 1 is designed as a substantially round tube. At the location where the suspension arm 2 crosses the axle body 1, the suspension arm is substantially flat (straight).

The connection comprises an axle pad 3 and straps 4. The axle pad 3 is positioned on the top side of the suspension arm 2 and has a recess 5 on the side remote from the suspension arm 2, in which recess a part of the axle body 1 can be accommodated. The axle pad 3 is provided with projections 6 which extend along either side of the suspension arm 2. These projections 6 ensure that the axle pad 3 and the suspension arm 2 cannot be displaced with respect to one another in the transverse direction of the suspension arm 2.

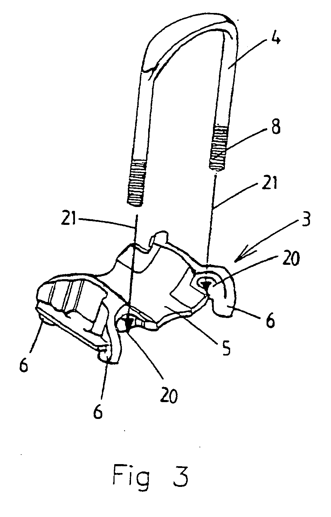

The straps 4 are positioned around the axle body 1 in the direction of the arrow 7. The limbs of the straps 4 are fitted through cutouts 20 in the axle pad 3, as indicated by arrows 21 in Fig. 3, and are arranged alongside the suspension arm 2 and through holes in a clamping plate (not shown) arranged beneath the suspension arm 2. The limbs of the straps 4 are each provided at their end with a threaded section 8 which is able to interact with threaded nuts (not shown), by means of which the connection can be tightened.

When the connection has been tightened, the axle body is accommodated in a positively locking manner in the recess 5. On one side of the axle body there is a weld 9, by means of which the axle pad 3 is fixedly connected to the axle body 1 and which extends substantially parallel to the centre axis of the axle body 1. Without the weld 9, the axle body 1 could rotate about its centre axis while the vehicle is in use on account of torsional forces. The weld 9 ensures that the axle body 1 is locked against this rotation.

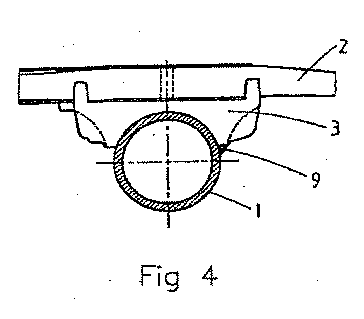

Fig. 4 shows an embodiment in which the axle body 1 runs below the suspension arm 2. The design of the axle pad 3 positioned between the suspension arm 2 and the axle body 1 substantially corresponds to the axle pad 3 shown in Fig. 1. As in the embodiment described above, the axle pad 3 and the axle body 1 are connected on one side by means of a weld 9 running substantially parallel to the centre axis of the axle body.

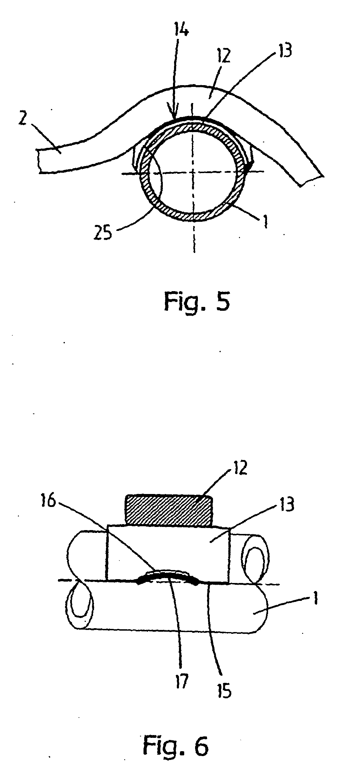

Figs. 5 and 6 show an embodiment of a connection according to the invention in which the suspension arm 2 has a curved section 12. The cavity 14 of the curved section 12 faces downwards. An axle pad 13 is positioned inside the cavity 14. On the side which faces towards the suspension arm 2, the axle pad 13 is designed to fit into the shape of the cavity 14. That side of the axle pad 13 which faces towards the axle body 1 forms the recess 25 in order to accommodate a part of the axle body 1.

In this embodiment, in accordance with the embodiments shown in Figs. 1 to 4, the axle pad 13 is securely welded to the axle body 1 along an edge 15 of the recess 25 which is substantially parallel to the centre axis of the axle body. For this purpose, the edge 15 of the axle pad 13 is provided with a recess 16 in which a weld 17 can be made, connecting the axle body 1 to the axle pad 13 and thus locking the axle body against undesired rotation.

The embodiments shown each illustrate axle bodies which are circular in cross section. However, it is clear that the invention is not restricted to axle bodies which are circular in cross section. Axle bodies with, for example, a rectangular or other shape of cross section can also be securely welded to an axle pad in the manner described, although this is less necessary, since axles of this shape are already locked against rotation by clamping on account of their shape.

## Claims

1. Connection between a tubular axle body (1) of a vehicle and a suspension arm (2) which extends in the longitudinal direction of the vehicle and crosses the axle body (1) substantially at right angles, comprising an axle pad (3), which is positioned between the axle body (1) and the suspension arm (2) and has a recess (5) in which a part of the axle body (1) is accommodated, and also comprising straps (4), by which the axle pad (3), and that part of the axle body (1) which is accommodated therein are fixed to the suspension arm (2), the axle body (1), in the mounted position, being pressed into the recess (5) on account of a clamping force which is supplied by the straps (4) and in the process coming to bear against the inner wall of the recess (5), that part of the axle body (1) which is accommodated in the axle pad (3) being securely welded to the axle pad (3), **characterized in that that** part of the axle body which is accommodated in the axle pad (3) is securely welded to a single edge, running substantially parallel to the centre axis of the axle body (1), of the recess (5).

2. Connection according to claim 1, in which the axle body (1) has a substantially circular cross-section.

3. Connection according to claim 1 or 2, in which the suspension arm (2) is substantially straight at the location of the axle body (1).

4. Connection according to claim 1 or 2, in which the suspension arm (2), at the location of the axle body (1), has a curved section, the cavity of the curved section facing towards the underside.

5. Connection according to claim 3, in which the axle pad (3) and that part of the axle body (1) which is accommodated therein are situated on the top side of the suspension arm (2).

6. Connection according to claim 3 or 4, in which the axle pad (3) and that part of the axle body (1) which is accommodated therein are situated on the underside of the suspension arm (2).

7. Tubular axle body (1) and suspension arm (2) which are connected to one another by means of a connection according to one of the preceding claims.

8. Vehicle provided with a tubular axle body (1) and a suspension arm (2) which are connected to one another by means of a connection according to one of claims 1-6.

## Patentansprüche

1. Verbindung zwischen einem röhrenförmigen Achsenkörper (1) eines Fahrzeugs und einem Aufhängungsarm (2), der sich in der Längsrichtung des Fahrzeugs erstreckt und den Achsenkörper (1) im Wesentlichen im rechten Winkel schneidet, die eine Achsenauflage (3) umfasst, die zwischen dem Achsenkörper (1) und dem Aufhängungsarm (2) angeordnet ist und eine Vertiefung (5) hat, in der ein Teil des Achsenkörpers (1) aufgenommen wird, und des Weiteren Bügel (4) umfasst, mit denen die Achsenauflage (3) und der Teil des Achsenkörpers (1), der darin aufgenommen ist, an dem Aufhängungsarm (2) befestigt sind, wobei der Achsenkörper (1) in der angebrachten Position aufgrund einer Klemmkraft, die durch die Bügel (4) zugeführt wird, in die Vertiefung (5) gedrückt wird und während des Vorgangs zum Anliegen an der Innenwand der Vertiefung (5) kommt, wobei der Teil des Achsenkörpers (1), der in der Achsenauflage aufgenommen ist, fest mit der Achsenauflage (5) verschweißt ist, **dadurch gekennzeichnet, dass** der Teil des Achsenkörpers, der in der Achsenauflage (3) aufgenommen wird, fest an einer einzelnen Kante der Vertiefung (5) angeschweißt ist, die im Wesentlichen parallel zu der Mittelachse des Achsenkörpers (1) verläuft.

2. Verbindung nach Anspruch 1, wobei der Achsenkörper (1) einen im Wesentlichen kreisförmigen Querschnitt hat.

3. Verbindung nach Anspruch 1 oder 2, wobei der Aufhängungsarm (2) an der Position des Achsenkörpers (1) im Wesentlichen gerade ist.

4. Verbindung nach Anspruch 1 oder 2, wobei der Aufhängungsarm (2) an der Position des Achsenkörpers (1) einen gekrümmten Abschnitt hat und der Hohlraum des gekrümmten Abschnitts zur Unterseite hin gewandt ist.

5. Verbindung nach Anspruch 3, wobei sich die Achsenauflage (3) und der Teil des Achsenkörpers (1), der darin aufgenommen ist, an der Oberseite des Aufhängungsarms (2) befinden.

6. Verbindung nach Anspruch 3 oder 4, wobei sich die Achsenauflage (3) und der Teil des Achsenkörpers (1), der darin aufgenommen ist, an der Unterseite des Aufhängungsarms (2) befinden.

7. Röhrenförmiger Achsenkörper (1) und Aufhängungsarm (2), die miteinander über eine Verbindung nach einem der vorangehenden Ansprüche verbunden sind.

8. Fahrzeug, das mit einem röhrenförmigen Achsenkörper (1) und einem Aufhängungsarm (2) versehen ist, die miteinander mittels einer Verbindung nach einem der Ansprüche 1-6 verbunden sind.

## Revendications

1. Connexion entre un corps d'essieu tubulaire (1) d'un véhicule et un bras de suspension (2) qui s'étend dans la direction longitudinale du véhicule et qui traverse le corps d'essieu (1) essentiellement à angle droit, comprenant un patin d'essieu (3), qui est positionné entre le corps d'essieu (1) et le bras de suspension (2) et qui comprend un retrait (5) dans lequel est logée une partie du corps d'essieu (1), et comprenant également des étriers de fixation (4), grâce auxquels le patin d'essieu (3), et cette partie du corps d'essieu (1) qui est logée en lui sont fixés sur le bras de suspension (2), le corps d'essieu (1), dans la position montée, étant poussé à l'intérieur du retrait (5) sous l'effet d'une force de serrage qui est exercée par les étriers de fixation (4) et dans le processus qui consiste à le mettre en portée contre la paroi interne du retrait (5), cette partie du corps d'essieu (1) qui est logée dans le patin d'essieu (3) étant solidement soudée sur le patin d'essieu (3), **caractérisée en ce que** cette partie du corps d'essieu qui est logée dans le patin d'essieu (3) est solidement soudée sur un seul bord du retrait (5), celui-ci étant disposé de manière sensiblement parallèle à l'axe central du corps d'essieu (1).

2. Connexion selon la revendication 1, dans laquelle le corps d'essieu (1) a une forme en coupe transversale sensiblement circulaire.

3. Connexion selon la revendication 1 ou la revendication 2, dans laquelle le bras de suspension (2) est sensiblement rectiligne à l'emplacement du corps d'essieu (1).

4. Connexion selon la revendication 1 ou la revendication 2, dans laquelle le bras de suspension (2), à l'emplacement du corps d'essieu (1), a une section courbe, la cavité de la section courbe étant dirigée vers le côté inférieur.

5. Connexion selon la revendication 3, dans laquelle le patin d'essieu (3) et cette partie du corps d'essieu (1) qui est logée en lui sont situés sur le côté supérieur du bras de suspension (2).

6. Connexion selon la revendication 3 ou la revendication 4, dans laquelle le patin d'essieu (3) et cette partie du corps d'essieu (1) qui est logée en lui sont situés sur le côté inférieur du bras de suspension (2).

7. Corps d'essieu tubulaire (1) et bras de suspension (2) qui sont connectés l'un à l'autre au moyen d'une connexion selon l'une des revendications précédentes.

8. Véhicule comportant un corps d'essieu tubulaire (1) et un bras de suspension (2) qui sont connectés l'un à l'autre au moyen d'une connexion selon l'une des revendications 1 à 6.
